# EUROPÄISCHE PATENTSCHRIFT

(11) **EP 3 072 112 B1**
(45) Veröffentlichungstag und Bekanntmachung des Hinweises auf die Patenterteilung: **16.06.2021**
(21) Anmeldenummer: 14793501.9
(22) Anmeldetag: 29.10.2014
(51) Int. Cl.: G07C 5/00, B60C 23/04, G07C 5/08

(54) **EINRICHTUNG ZUM AUFZEICHNEN UND ÜBERMITTELN VON FAHRZEUGDATEN**
DEVICE FOR RECORDING AND TRANSMITTING VEHICLE DATA
DISPOSITIF D'ENREGISTREMENT ET DE TRANSMISSION DE DONNÉES DE VÉHICULES

(30) Priorität: 19.11.2013 DE 102013112787
(43) Veröffentlichungstag der Anmeldung: 28.09.2016
(73) Patentinhaber: Huf Hülsbeck & Fürst GmbH & Co. KG, 42551 Velbert (DE)
(72) Erfinder: GENNERMANN, Sven, 42551 Velbert (DE); BAMBECK, Daniel, 45149 Essen (DE)
(74) Vertreter: Zenz Patentanwälte Partnerschaft mbB
(86) Internationale Anmeldenummer: PCT/EP2014/073220
(87) Internationale Veröffentlichungsnummer: WO 2015/074845

(56) Entgegenhaltungen:
- WO-A1-2007/070137
- US-A1- 2010 063 904
- US-A1- 2011 112 717
- US-A1- 2012 235 807

## Beschreibung

Die Erfindung betrifft eine Einrichtung zur Aufzeichnung von Fahrzeugdaten und zur Übermittlung von den erfassten und aufgezeichneten Fahrzeugdaten an entfernte Stationen. Insbesondere betrifft die Erfindung eine Telematik-Einrichtung, die zur Erfassung, Aufzeichnung und Übermittlung von Zustandsdaten von Fahrzeugen geeignet ist.

Telematik-Einrichtungen für Fahrzeuge sind in unterschiedlichen Gestaltungen bekannt. Grundsätzlich wird dann von einer Telematik-Einrichtung für Fahrzeuge gesprochen, wenn fahrzeugseitig erfasste Informationen an externe Erfassungssysteme, Speichersysteme oder Überwachungssysteme übermittelt werden. Bei dieser Übermittlung kommen Telekommunikationssysteme zum Einsatz.

Fahrzeug-Telematiksysteme sind im Markt etabliert und dienen der Erfassung und Aufzeichnung verschiedener Fahrzeugdaten. Telematik-Funktionseinheiten können dafür an verschiedenen Stellen im Fahrzeug installiert werden, wobei sie Daten über eigene Sensoren erfassen oder Daten vom Bussystem des Fahrzeuges abgreifen. Die EP 1 589 489 beschreibt eine solche telematikbasierte Datenerfassungsarchitektur.

Die WO 2009/074655 offenbart ein weiteres Telematik-System, bei dem relevante Fahrzeugdaten über eine mobile Kommunikation übermittelt werden.

Die US 2010/0063904 A1 und die US 2011/0112717 A1 offenbaren weitere Telematiksysteme für Kraftfahrzeuge.

Telematik-Systeme können in vielfältiger Weise genutzt werden. Insbesondere Logistikunternehmen oder Fuhrparkmanagementunternehmen sind darauf angewiesen, aktuelle Fahrzeugdaten über den Standort und sonstige Eigenschaften eines Fahrzeuges zu erhalten. Im Bereich der Überwachung von Fahrverhalten können Telematiksysteme zur risikooptimierten Einstufung bei Versicherungen verwendet werden. Bei sicherheitsrelevanten Transporten (beispielsweise Werttransporten) kann die jederzeitige und hochpräzise Überwachung des Zustandes eines Fahrzeuges besonders relevant sein. Entsprechend bieten die bekannten Telematiksysteme die Möglichkeit, Trigger als Auslöser für die Datenübermittlung oder Datenspeicherung zu definieren. Beispielsweise werden Fahrzeugdaten erfasst wenn eine bestimmte Fahrleistung von einer vorgegebenen Anzahl von Kilometern absolviert wurde (beispielsweise jeden Kilometer) oder eine gewisse Zeit verstrichen ist. Auch bei Fahrtrichtungswechsel um eine Mindestgradzahl kann eine Übermittlung oder Speicherung ausgelöst werden.

Für das Führen von elektronischen Fahrtenbüchern sind Telematik-Systeme ebenfalls einsetzbar, beispielsweise für die Erfassung von Dienstfahrten für steuerliche Zwecke, aber auch für die Überwachung von vorgeschriebenen Pausenzeiten oder maximalen Fahrdauern.

Die Nachrüstung derartiger Telematik-Systeme in vorhandenen modernen Fahrzeugen ist ebenfalls bekannt. Die Anbindung kann an den Fahrzeugbus erfolgen, beispielsweise über die Fahrzeugdiagnoseschnittstelle (OBD/On-Board-Diagnose). Diese Schnittstelle eignet sich besonders, da sie seit mehreren Jahren ein einzuhaltender Standard bei Fahrzeugen ist und daher das Telematik-System eine verlässliche und einheitliche Anbindung vorfindet.

Mit der zunehmenden Attraktivität von Leasing-Konzepten, Car-Sharing-Konzepten und Mietwagen besteht der Bedarf, ein leicht nachträglich zu installierendes Telematik-System bereitzustellen, welches beispielsweise am Ende der Dienstzeit eines Fahrzeuges und beim Verkauf des Fahrzeuges auch leicht entfernt und einer Weiterverwendung in einem anderen Fahrzeug zugeführt werden kann.

Aufgabe der Erfindung ist es, ein bedienfreundliches Telematik-System mit verbesserter Funktionalität zur Verfügung zu stellen.

Diese Aufgabe wird gelöst durch eine Einrichtung mit den Merkmalen des Patentanspruches 1.

Das erfindungsgemäße Telematik-System weist einen Steckverbinder auf, der zur Kopplung mit der Diagnoseschnittstelle, insbesondere der OBD2-Schnittstelle des Fahrzeuges ausgebildet ist. Mit diesem Steckverbinder ist eine Steuer- und Auswerteeinheit gekoppelt. Außerdem ist eine Bedieneinheit vorgesehen, welche zur Anordnung im Innenraum des Fahrzeuges ausgebildet ist. Die Bedieneinheit weist zugängliche Betätigungselemente auf, mit denen ein Benutzer Schaltvorgänge in der Steuer- und Auswerteeinrichtung auslösen kann. Die Bedieneinheit ist mit einem Gehäuse ausgebildet, welches über eine kabelgebundene Signalleitung mit dem Steckverbinder für die Diagnose-Schnittstelle gekoppelt ist.

Die Diagnose-Schnittstelle ist von der zentralen, fahrzeugseitigen Steuereinheit ansteuerbar. Dies ermöglicht insbesondere die gezielte Aktivierung der Telematik-Einheit. Beispielsweise kann die fahrzeugseitige Steuereinheit die Telematik-Einheit aktivieren, sobald ein berechtigter Zugang zum Fahrzeug erkannt wird. Wird also ein drahtloser Authentifizierungsprozess zwischen Fahrzeug und einem ID-Geber eines Benutzers durchgeführt und eine Berechtigung erkannt, wir die Telematik-Einheit vorbereitend hochgefahren.

Die Steuer- und Auswerteeinrichtung kann zwischen dem Steckverbinder und der Bedieneinheit grundsätzlich an einer beliebigen Stelle angeordnet sein. Die Steuer- und Auswerteeinrichtung ist mit der Bedieneinheit in einem einheitlichen Gehäuse integriert.

Mit der Steuer- und Auswerteeinrichtung ist ein Telekommunikationsmodul gemäß dem Stand der Technik gekoppelt. Dieses Telekommunikationsmodul ist unabhängig von möglicherweise im Fahrzeug bereits vorhandenen Telekommunikationsmodulen. Außerdem ist in der erfindungsgemäßen Einrichtung ein satellitengestütztes Positionsbestimmungssystem integriert und mit der Steuer- und Auswerteeinrichtung gekoppelt.

Wesentlich an der Telematik-Einrichtung gemäß der Erfindung ist die Ausbildung einer kabelgebundenen Bedieneinheit, die für den Benutzer zugänglich, im Fahrzeuginnenraum anzuordnen ist und über eine Kabelverbindung mit der OBD2-Schnittstelle gekoppelt ist. Diese Bedieneinheit kann trotz der Kopplung mit der OBD2-Schnittstelle dauerhaft an einer bequem zugänglichen Position im Fahrzeuginnenraum platziert werden.

Die Bedieneinheit weist Bedienelemente auf, die an dem Gehäuse angeordnet sind und einen raschen Zugriff auf wichtigen Funktionen erlaubt. Die Bedieneinheit ist also für eine regelmäßige Handhabung durch einen Benutzer ausgebildet. Die Bedienelemente können insbesondere Taster oder berührungsempfindliche Flächen sein.

Gegenüber bekannten Einrichtungen hat die erfindungsgemäße Einrichtung also zunächst den Vorteil ein unmittelbaren Zugänglichkeit im Fahrzeuginnenraum, vom Platz des Fahrers.

Erfindungsgemäß weist eines der Bedienelemente eine Belegung auf, die eine gezielte Aktivierung oder Deaktivierung der Aufzeichnungs- und/oder Übermittlungsaktivität erlaubt. Diese Taste ist vorgesehen um zeitbegrenzt, z.B. fahrtbezogen, eine Auswahl vorzugeben, ob eine Erfassung sämtlicher Daten während der aktuellen Fahrt oder der bevorstehenden Fahrt erfolgen soll.

Die Einrichtung weist dazu eine ggf. konfigurierbare oder werkseitig festgelegte Voreinstellung auf. Entweder kann gemäß Voreinstellung eine Erfassung sämtlicher Fahrzeugdaten vorgesehen sein, beispielsweise eine Erfassung der Position und Fahrtinformationen per Vorgabe erfolgen und an eine entfernte Stelle übermittelt werden. Bei dieser Voreinstellung bewirkt die Betätigung des Bedienelementes eine Deaktivierung der Übermittlung für die aktuelle Fahrt oder einen vorgegebenen Zeitraum. Alternativ kann die telematische Erfassung voreinstellungsmäßig deaktiviert sein und die Taste aktiviert die Überwachung für die aktuelle Fahrt oder einen vorgegebenen Zeitraum. Die Taste kann auch zwischen zwei Zuständen wechseln und den aktuellen Betriebszustand mit einer grafischen Anzeige, beispielsweise einer LED an dem Bediengerät anzeigen. Auch eine stufenweise Schaltung verschiedener Erfassungsschemata mit unterschiedlichen Daten kann durch die Bedienelemente durchgeschaltet werden, wobei das eingestellte Schema gut ablesbar signalisiert wird.

Entsprechend bietet die an die OBD2-Schnittstelle angeschlossene Bedieneinheit bei Anordnung im Kraftfahrzeugraum eine einfach zugängliche Bedienmöglichkeit, um zwischen den telematisch überwachten Betrieb des Fahrzeuges und dem nicht telematisch überwachten Betrieb zu schalten. Dies ist insbesondere vorteilhaft, wenn ein Fahrzeug beispielsweise sowohl für private Fahrten als auch für Dienstfahrten genutzt wird. Bei Dienstfahrten soll die telematische Erfassung der Wegstrecken und sonstigen Fahrparameter automatisch erfolgen und übermittelt werden, z.B. um eine entsprechende Abrechnung und steuerliche Berücksichtigung vorzunehmen. Bei privat veranlassten Fahrten kann es sein, dass insbesondere aus Gründen des Datenschutzes eine telematische Überwachung nicht erwünscht ist und die am Bedienteil im Fahrzeuginnenraum angeordnete Taste erlaubt die rasche Übermittlung dieses Wunsches an die Steuer- und Auswerteeinrichtung. Diesbezüglich arbeitet die Einrichtung für den Benutzer transparent und zeigt den jeweiligen Betriebszustand an.

Welche Funktionen der telematischen Erfassung durch die Betätigung der Taste deaktiviert werden bzw. aktiviert werden, ist je nach Anwendungsfall vorzugeben. Beispielsweise können sämtliche telematischen Funktionen deaktiviert werden, bis auf eine Mitteilung des Kilometerstandes bei der nächsten Umschaltung in den telematisch überwachten Betrieb, um die privat gefahrenen Kilometer zu übermitteln.

Die erfindungsgemäße Einrichtung ist entsprechend ausdrücklich für eine gezielte Aktivierung oder Deaktivierung zumindest einiger Telematikfunktionen durch den Benutzer vorgesehen.

Die Bedienanordnung enthält außerdem eine Lautsprechereinrichtung und eine Mikrofoneinrichtung, welche mit dem Telekommunikationsmodul zur Übermittlung von Sprachinformationen gekoppelt sind. Da die Bedieneinheit im Fahrzeugraum in der Nähe des Fahrerbereiches und vom Fahrer aus zugänglich angeordnet wird, ist damit auch eine Zugänglichkeit für akustische Informationen gegeben. Insbesondere eine Notruffunktion oder Servicekommunikation ist damit über die Einrichtung möglich.

Im Bedienteil ist ein Nahfeldkommunikationsmodul angeordnet, welches mit der Steuer- und Auswerteeinrichtung gekoppelt ist. Die Bedieneinheit weist dann beispielsweise eine NFC-Kommunikationsschnittstelle auf. Insbesondere bei Einsatz in Car-Sharing-Projekten oder Mietwagen kann auf diese Weise bei dem im Fahrzeug angeordneten Bedienmodul aufgrund dessen Erreichbarkeit eine integrierte Lösung sowohl für die Bedienung der Telemetrie-Einrichtung als auch eine Auslesung von Daten aus gekoppelten Geräten erfolgen. Wird beispielsweise ein NFC-fähiges Mobiltelefon in die Erfassungsnähe der Einrichtung gebracht, können die entsprechenden Daten durch die Steuer- und Auswerteeinrichtung ausgelesen werden und über das Telekommunikationsmodul der Einrichtung an eine Zentrale, beispielsweise eine Car-Sharing-Zentrale übermittelt werden. Wird dort die ausgelesene Autorisierungsinformationen geprüft, kann in der Gegenrichtung eine Autorisierungsmitteilung mit der Freigabe zum Start des Fahrzeuges übermittelt werden. Gemäß der Erfindung besteht die Einrichtung entsprechend nicht nur aus einer Telemetrie-Einrichtung mit einem im Fahrzeugraum angeordneten Bedienteil, es ist außerdem ein Kommunikationsgerät für Autorisierungsmittel, also beispielsweise für Mobiltelefone oder auch Schlüsselkarten vorgesehen. Die Einrichtung stellt dann eine integrierte Lösung sowohl für telemetrische Übermittlungen als auch zur Benutzungsautorisierung dar. In Kombination mit den telemetrischen Daten ist anhand der per NFC oder sonstiger Nahfeldtechnik übermittelten Autorisierungsinformationen unmittelbar eine Zuordnung der Benutzungsdaten zu dem Nutzer möglich.

Die Kommunikationseinrichtung kann auch gemäß einem anderen Kommunikationsstandard ausgebildet sein, z.B. als Bluetooth fähige Einrichtung.

Die Einrichtung enthält zusätzlich einen Funkempfänger. Dieser Funkempfänger ist für den Empfang von Daten von Reifendruckkontrollsystemen (TPMS) ausgebildet. Der für diesen Zweck ausgebildete Empfänger wird zur Unterscheidung im Weiteren als TPMS-Empfänger bezeichnet.

Der TPMS-Empfänger ist für den Informationsempfang für sogenannte direkte Reifendruckkontrollsysteme ausgebildet, die den Reifendruck in jedem Rad über zugehörige Reifendrucksensoren erfassen. Diese Informationen werden zusammen mit einer individuellen Kennung des Reifendrucksensors per Funksignal an ein Steuergerät im Fahrzeug gesendet. Die erfindungsgemäße Einrichtung weist einen TPMS-Empfänger für diese Reifendruckkontrollsysteme auf, integriert mit den übrigen Komponenten, insbesondere der Bedieneinrichtung und der Steuer- und Auswerteeinrichtung. Die Datenübertragung solcher Reifendruckkontrollsysteme erfolgt in Abhängigkeit vom Einsatzland im Bereich von einigen 100 MHz, beispielsweise im 434 MHz-Band oder im 315 MHz-Band. Die Reifendruckinformationen können zusammen mit den übrigen telemetrischen Daten an die entfernte Verwaltungseinrichtung, beispielsweise einem entfernten Server mit gekoppeltem Bediensystem für einen Fuhrparkmanager gesandt werden.

Die Informationen können von den Reifen ausgesandt werden und durchaus parallel auch an ein fest im Fahrzeug eingebautes TPMS-Steuersystem übermittelt werden. Der TPMS-Empfänger in der erfindungsgemäßen Einrichtung wirkt dann als weiterer Empfänger der Informationen. Die erfindungsgemäße, nachrüstbare Einrichtung kann aber auch die alleinige TPMS-Empfangsantenne und Steuereinrichtung im Fahrzeug enthalten. Das nachrüstbare System stattet dann Fahrzeuge ohne TPMS-System mit dieser Funktionalität nachträglich aus.

Ein wesentlicher Vorteil besteht darin, dass die Sicherheit der Fahrzeuge erhöht wird, da rechtzeitig vor einem kritischen Reifendruck gewarnt werden kann. Grundsätzlich kann an der Bedieneinheit auch eine Warnleuchte oder ein Display angeordnet sein, welches bei einem unangemessenen Reifendruck vorwarnt.

Ein wesentlicher anderer Vorteil ist jedoch neben dem Druck selbst die Erfassung der Kennung jedes einzelnen Reifendrucksensors. Diese Kennung wird bei TPMS-Systemen zusammen mit dem Reifendruck übermittelt. Sowohl im Bereich des Car-Sharings als auch des Fuhrparkmanagements bei Mietwagen ist es bekannt, dass an Fahrzeugen während der Mietdauer neuwertige Reifen gegen alte Reifen ausgetauscht werden und die Fahrzeuge dann mit stark abgenutzten Reifen zurückgegeben werden, was bei der Rückgabe regelmäßig nicht auffällt. Da zusammen mit dem Reifendruck aber die Kennung des Reifendrucksensors übermittelt wird, ist erfindungsgemäß vorgesehen, die Kennungen wenigstens zeitweise in der Steuer- und Auswerteeinrichtung und einem zugehörigen Speicher abzuspeichern. Die Veränderung einer oder mehrerer der Kennungen gegenüber den abgespeicherten Werten wird unverzüglich an die entfernte Verwaltungseinrichtung übermittelt, so dass jederzeit erkannt wird, wenn es zu einem Reifenwechsel gekommen ist. Ist dies der Fall wird überprüft, ob dieser Reifenwechsel legitim war, oder ob es sich um einen Reifendiebstahl bzw. illegitimen Reifenwechsel handelt.

Zu diesem Zweck ist also ein TPMS-Funkempfänger der bekannten Art integriert mit der Telematik-Einrichtung, so dass auch Fahrzeuge ohne eigene Reifendruckkontrolleinrichtung mit der unabhängigen, in der Telematik-Einrichtung angeordneten Empfangseinrichtung kontrolliert werden können.

Es sind außerdem weitere drahtlose Kommunikationsmodule mit der Einrichtung integriert, insbesondere Bluetooth-Kommunikationsmodule, welche die Kommunikation mit Recheneinheiten im Fahrzeug oder z. B. weiteren Telemetriemodulen erlauben. Beispielsweise kann eine Laderaumüberwachung über Bluetooth an die Telemetrieeinrichtung angebunden werden, um Zustandsänderungen im Laderaum an das System zu übermitteln. Das System ist entsprechend mit anderen Suchsystemen erweiterbar, die in drahtloser Kommunikation mit der erfindungsgemäßen Einrichtung stehen.

Wesentlich bei der erfindungsgemäßen Einrichtung ist die Integration von verschiedenen Funktionen in ein einheitliches Gehäuse mit Bedieneinrichtung für den Benutzer und eine Verkabelung mit einer Standardschnittstelle im Fahrzeug. Die Zugänglichkeit der Überwachungseinrichtung ist Teil des Konzeptes, da eine Benutzerbetätigung bei dieser Einrichtung ausdrücklich regelmäßig vorgesehen ist und die Funktion der telematischen Übermittlung gezielt beeinflusst werden kann.

Die Erfindung wird nun anhand einer Zeichnung näher erläutert.
Figur 1 zeigt ein schematisches Blockschaltbild einer erfindungsgemäßen Telematikeinrichtung gemäß einer Ausführungsform der Erfindung;
Figur 2 zeigt in schematischer Weise die Anordnung der erfindungsgemäßen Telematikeinrichtung in einem Fahrzeug;
Figur 3 zeigt eine beispielhafte Ausführungsform des Gehäuses der erfindungsgemäßen Einrichtung gemäß einer ersten Ausführungsform mit integrierter Steuer-Auswerteeinrichtung und Bedieneinheit.

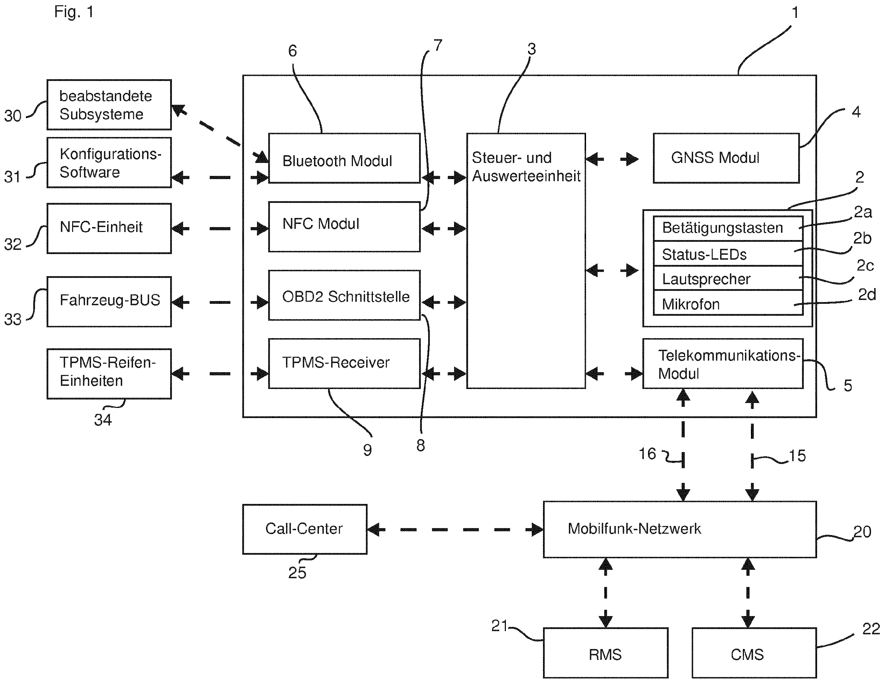

Figur 1 zeigt das Zusammenwirken und die Anordnung unterschiedlicher Funktionsmodule in der erfindungsgemäßen Telematikeinrichtung.

Gemäß dieser Ausführungsform ist die Einrichtung 1 als integrierte Einrichtung mit Bedieneinheit 2 ausgebildet. Ein gemeinsames Gehäuse nimmt in diesem Ausführungsbeispiel eine Bedieneinheit 2 mit Betätigungselementen 2a, Statusanzeigen in Gestalt von LED-Elementen 2b, einen Lautsprecher 2c und ein Mikrophon 2d auf. Weiterhin ist in der Einrichtung die Steuer- und Auswerteeinheit 3 ausgebildet, die mit einem satellitengestützten Positionsbestimmungssystem 4 und einem Telekommunikationsmodul 5 versehen ist. Mit der Steuer- und Auswerteeinheit sind außerdem ein Bluetooth-Modul 6, ein NFC-Modul 7, eine OBD2-Schnittstelle 8 und ein TPMS-Receiver 9 zu einer gemeinsamen Einheit integriert.

Das Telekommunikationsmodul 5 wickelt sowohl Datentransfer 15 als auch die Übertragung von Sprachdaten 16 mit einem Mobilfunknetzwerk 20 ab. Im Falle des Transfers von Zustandsdaten des Fahrzeuges werden die Daten des Fahrzeuges hinsichtlich Telemetrie und Fahrzeugdaten an einen Server (Resource Management Server) RMS über eine Verbindung 21 weitergeleitet. Außerdem kann über eine Datenverbindung 22 ein Konfigurationsserver (Configuration Management Server) CMS Daten, Software und Informationen an die Telematikeinheit 1 übermitteln. Im Falle von Sprachverbindungen, beispielsweise bei Serviceanfragen über das Telematikmodul oder im Falle von Notsituationen ist ein Call-Center 25 kontaktierbar, mit dem über ein Mobilfunknetzwerk 20 eine Sprachverbindung mit Hilfe des Telekommunikationsmoduls 5 hergestellt werden kann.

Das Bluetooth-Modul 6 kann verwendet werden, um beabstandete Subsysteme im Fahrzeug anzusprechen und deren Daten abzufragen. Solche Subsysteme sind beispielsweise über die Bluetooth-Schnittstelle angebundene Sensoren, bei Fahrzeugen mit Hänger z.B. Erfassungseinheiten im Hänger oder sonstige Laderaumerfassungssysteme. Außerdem kann über die Bluetooth-Schnittstelle ein Gerät mit Konfigurationssoftware eine Kommunikation mit der Einrichtung 1 aufbauen. Dafür sind beispielsweise mobile Handgeräte wie Smartphones mit entsprechenden Applikationen auszustatten, um Daten aus der Einheit 1 abzufragen oder eine Einstellung an der Einheit vorzunehmen. Das NFC-Modul 7 ist ein NFC-Kommunikationsmodul üblicher Bauart, welches eine Kommunikationsmöglichkeit mit NFCfähigen Geräten oder Karten 32 erlaubt. Über entsprechende NFC-Einheiten, also beispielsweise ein entsprechendes Mobiltelefon mit NFC-Funktionalität, kann eine Autorisierung zur Benutzung des Kraftfahrzeuges eingeleitet werden. Die NFC-Einheit 32 wird in unmittelbarer Nähe des NFC-Moduls 7 der Einrichtung 1 gebracht, ein NFC-Dialog wird gestartet und nach Autorisierung wird eine Steuerfreigabe für das Fahrzeug über die Schnittstelle des Fahrzeugbusses 8, 33 übermittelt. Zur Autorisierung kann dabei entweder auf dem System gespeicherte Daten zurückgegriffen werden oder die Steuer- und Auswerteeinheit 3 baut über das Telekommunikationsmodul 5 eine Verbindung mit dem Autorisierungs-Server auf und übermittelt die ausgelesenen Daten aus der NFC-Kommunikation. Die Anbindung der Einrichtung 1 über eine kabelgefundene Schnittstelle mit dem Fahrzeug geschieht über die OBD2-Schnittstelle 8, die mit dem Fahrzeugbus 33 gekoppelt ist.

Wie weiter unten beschrieben wird, ist die Einrichtung 1 kabelgebunden an die OBD2-Schnittstelle angebunden mit ihrer Gehäuseeinheit jedoch im unmittelbar zugänglichen Bereich des Fahrers angeordnet, damit dieser Bedienungen der Bedienelemente 2 vornehmen kann und auch die NFC-Kommunikation mit dem NFC-Modul 7 bequem durchführen kann.

Erfindungsgemäß ist bei dieser Ausführungsform außerdem eine Empfangseinrichtung mit der Einrichtung 1 integriert, in Gestalt eines TPMS-Empfangsgerätes 9. Dieses empfängt von den reifenseitig montierten Sendeeinrichtungen aktuelle Daten zum Luftdruck der jeweiligen Reifen und zur Identifikation der am Reifen montierten Druckmesseinrichtung. Diese Besonderheit erlaubt es, die Informationen von den Fahrzeugreifen mit in die telemetrische Erfassung aufzunehmen. Die Kommunikation in TPMS-Systemen ist grundsätzlich aus dem Stand der Technik bekannt, entsprechend sind auch zugehörige Empfangseinheiten für TPMS-Systeme bekannt. Die Kombination mit einem Telemetriegerät ist jedoch besonders vorteilhaft, da die übermittelten Daten einerseits hinsichtlich der Fahrzeugsicherheit und andererseits zur Verhinderung von Diebstahl und Missbrauch benutzt werden können.

Gerade im Bereich des Fuhrpark-Managements und im Bereich der Mietwagen sowie im Car-Sharing ist es bekannt, dass Benutzungszeiten zum Diebstahl durch Austausch von Fahrzeugreifen oder Fahrzeugrädern genutzt werden. Fahrzeuge werden entgegengenommen, und später mit minderwertigeren Reifen oder Rädern zurückgegeben. Da die Identifikation der am Reifen montierten Druckmesseinrichtungen von der Einrichtung 1 über den TPMS-Receiver 9 aufgenommen und an die Steuer- und Auswerteeinheit 3 weitergeleitet wird, kann in der Steuer- und Auswerteeinheit ein Abgleich der zugehörigen Identifikationen erfolgen. Wird eine Veränderung einer Identifikation registriert, wird also ermittelt, dass eine Gruppe von z. B. vier Identifikationskennungen ein oder mehrere geänderte Kennungen aufweist, kann dies dem Management-Server 21 über das Mobilfunknetzwerk 20 mitgeteilt werden. Es kann sich dabei um einen vorgesehenen Reifenwechsel oder Räderwechsel handeln, in diesem Fall wird von Serverseite eine entsprechende Meldung quittiert. Wenn jedoch ein Reifenwechsel nicht vorgesehen ist, kann der Zeitpunkt des unberechtigten Reifenwechsels genau festgelegt werden und ggf. sogar eine Fahrtberechtigung per Fernwirkung entzogen werden.

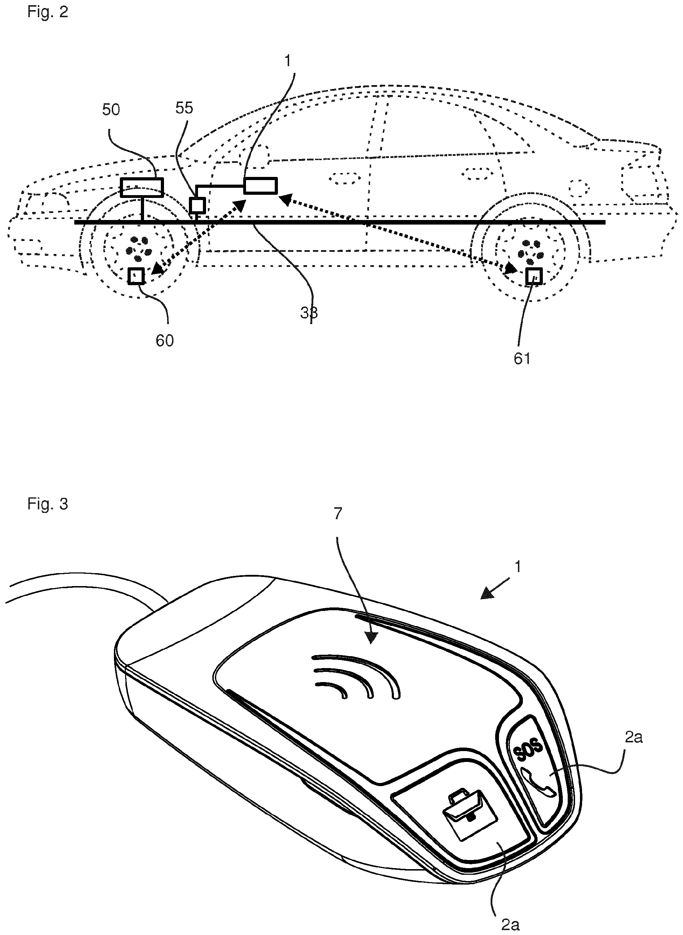

In der Figur 2 ist schematisch gezeigt, wie die erfindungsgemäßen Komponenten in einem Fahrzeug angeordnet sind. Eine zentrale Steuereinrichtung des Fahrzeuges 50 ist fest im Fahrzeug eingebaut und mit einem Fahrzeugbus 33 gekoppelt. An dem Fahrzeugbus 33 ist eine OBD2-Schnittstelle 55 vorgesehen, die zum Anschluss der Einrichtung 1 dient. Die Einrichtung 1 ist dabei kabelgebunden an die Schnittstelle gekoppelt. Eine entsprechende Kabellänge erlaubt es, die Einheit 1 mit dem Gehäuse, welches die Funktionskomponenten aus Figur 1 aufnimmt, bequem zugänglich im Fahrzeuginnenraum, z. B. im Bereich der Mittelkonsole anzuordnen. Auf diese Weise ist eine Kommunikation der Einrichtung 1 über den Fahrzeugbus 55 möglich. An den Rädern des Fahrzeuges sind Druckmesssensoren des TPMS-Systems angeordnet, wobei dort Sendeeinheiten 60 und 61 ausgebildet sind. Diese kommunizieren mit der Empfangseinrichtung in der Einrichtung 1, um sowohl Reifendruckinformationen als auch Identifikationsinformationen drahtlos an die Einrichtung 1 zu übermitteln.

Figur 3 zeigt eine beispielhafte Gestaltung des erfindungsgemäßen Gerätes mit einem Gehäuse, welches die Funktionskomponenten aus Figur 1 integriert und über Kabel an die OBD2-Schnittstelle angebunden ist. Das Gerät weist in diesem Beispiel zwei Betätigungstasten 2a auf. Eine der Betätigungstasten ist ausgebildet, um die Einrichtung in einen Dienstfahrt-Aufzeichnungsmodus zu versetzen. Es genügt ein einfacher Druck auf die mit der Aktentasche versehene Taste, um die Aufzeichnung der relevanten Informationen zu veranlassen, die für die Aufzeichnung der vorgeschriebenen Informationen für ein zulässiges Fahrtenbuch oder als firmenmäßig verlangten Informationen vorgesehen sind. Wird diese Taste nicht gedrückt, so zeichnet die Einrichtung entweder gar keine Informationen auf oder z. B. ausschließlich Informationen, die mit Notsituationen verbunden sind. Eine weitere Taste erlaubt einen raschen Notruf, wobei bei Betätigung der Taste auch eine Sprachverbindung über das integrierte Mikrophon und den Lautsprecher mit dem Call-Center aufgebaut wird.

Eine Koppelfläche ist am Gehäuse vorgesehen, unter welcher das NFC-Modul 7 der Einrichtung 1 angeordnet ist. Im Falle einer Car-Sharing-Lösung oder eines Mietwagens kann dort eine entsprechende Karte aufgelegt werden oder ein NFC-fähiges Mobilgerät wird in der Nähe der Fläche 7 gebracht, um eine NFC-Kommunikation mit der Einrichtung zu erlauben.

Es ist erkennbar, dass eine einheitliche, integrierte und betätigungsfreundliche Lösung vorgesehen wird, welche mit einer Standardschnittstelle versehen ist und multifunktionale Anbindung an fahrzeugseitige Systeme erlaubt. In dieser Ausgestaltung ist es möglich, über die in der Einrichtung vorgesehene TPMS-Schnittstelle auch Informationen zum Zustand und zur Integrität der Fahrzeugreifen oder Fahrzeugräder zu erhalten, ohne auf fahrzeugseitige TPMS-Empfangssysteme zurückgreifen zu müssen. Wichtige Funktionen der Einrichtung können über unmittelbar zugängliche Funktionstasten erreicht werden, insbesondere die Aktivierung oder Deaktivierung des telemetrischen Aufzeichnungs- und Übermittlungsmodus. Weitere komplexere Funktionen können über die Bluetooth-Schnittstelle und einer entsprechenden Applikation auf einem Smartphone ausgelöst werden.

Wesentlich ist, dass eine kompakte und leicht zugängliche Bedieneinheit vorgesehen wird, welche einerseits eine einfache Bedienung und rasche Zugänglichkeit erlaubt und andererseits die Funktionalität herkömmlicher telemetrischer Systeme mit erweiterter Funktionalität mittels NFC-Kommunikation sowie Betätigungsmöglichkeiten, Sprachkommunikationen und TPMS-Funktionalität zusammenfasst.

## Patentansprüche

1. Einrichtung (1) zur Erfassung und Übermittlung von Zustandsdaten von Fahrzeugen, aufweisend,
eine Anbindungs-Schnittstelle (8) zur Kopplung der Z P Einrichtung mit einer Diagnoseschnittstelle (OBD-Schnittstelle) des Fahrzeuges,
eine Steuer- und Auswerteeinheit (3), die mit der Schnittstelle (8) zur Ausführung einer Kommunikation über einen Fahrzeugbus gekoppelt ist,
ein satellitengestütztes Positionsbestimmungssystem (4), welches mit der Steuer- und Auswerteeinheit (3) zur Übermittlung von Positionsdaten an die Steuer- und Auswerteeinheit gekoppelt ist,
ein Telekommunikationsmodul (5), welches mit der Steuer- und Auswerteeinheit (3) gekoppelt ist, um drahtlose Datenkommunikation mit entfernten Stellen (21, 22) auszuführen,
wobei eine Bedieneinheit (2) vorgesehen ist, die über eine kabelgebundene Verbindung mit der Anbindungs-Schnittstelle (8) derart gekoppelt ist, dass eine Anordnung der Bedieneinheit im Bedienbereich des Fahrers möglich ist, wobei die Bedieneinheit (2) wenigstens ein Bedienelement (2a) aufweist, welches mit der Steuer- und Auswerteschaltung gekoppelt ist,
wobei die Steuer- und Auswerteschaltung je nach Betätigung des Bedienelementes unterschiedliche Mengen oder Gruppen von Zustandsdaten erfasst und/oder übermittelt,
wobei die Einrichtung eine Mikrofoneinheit und eine Lautsprechereinheit aufweist, welche mit dem Telekommunikationsmodul gekoppelt sind, um Sprachverbindungen mit entfernten Stellen herzustellen,
wobei die Einrichtung ein Nahfeld-Kommunikationsmodul aufweist, welches mit der Steuer- und Auswerteeinheit gekoppelt ist,
wobei die Einrichtung ein Kommunikationsmodul für Kurzreichweiten-Kommunikation, insbesondere ein Bluetooth-Kommunikationsmodul aufweist, welches mit der Steuer- und Auswerteeinheit gekoppelt ist,
wobei eine Empfangseinheit für Signale von Reifendrucksensoren (TPMS-Sensoren) vorgesehen ist, welche mit der Steuer- und Auswerteeinheit zur Erfassung von Identifikationsdaten und Messdaten von Reifendrucksensoren ausgebildet ist,
wobei die Bedieneinheit mit der Steuer- und Auswerteeinrichtung in einem Gehäuse integriert ist und in dem Gehäuse auch das Nahfeld-Kommunikationsmodul, die Empfangseinheit für Signale von Reifendrucksensoren, das Positionsbestimmungssystem und das Telekommunikations-Modul integriert sind.

2. Einrichtung nach Anspruch 1, wobei das Bedienelement mit der Steuer- und Auswerteschaltung gekoppelt ist, um zwischen einem Erfassungs- und Übermittlungsmodus mit fortlaufender Positionserfassung und einem Erfassungs- und Übermittlungsmodus mit reduzierten Zustandsdatenmengen, ohne fortlaufende Positionserfassung des Fahrzeuges zu wechseln.

3. Einrichtung nach Anspruch 1, wobei die Steuer- und Auswerteeinrichtung die Identifikationsdaten wenigstens zeitweise speichert und bei einer erfassten Veränderung der Identifikationsdaten eine Meldung an eine entfernte Stelle übermittelt.

## Claims

1. Device for recording and transmitting status data of vehicles, having,
a connection interface (8) for coupling the device to a diagnostic interface (OBD interface) of the vehicle,
a control and evaluation unit (3) coupled to the interface (8) for carrying out communication via a vehicle bus
a satellite-based position determination system (4) which is coupled to the control and evaluation unit (3) for transmitting position data to the control and evaluation unit
a telecommunication module (5) coupled to the control and evaluation unit (3) for carrying out wireless data communication with remote locations (21, 22),
wherein an operating unit (2) is provided which is coupled to the connection interface (8) via a wired connection in such a way that it is possible to arrange the operating unit in the operating area of the driver, wherein the operating unit (2) has at least one operating element (2a) which is coupled to the control and evaluation circuitry
wherein the control and evaluation circuit detects and/or transmits different quantities or groups of status data depending on the actuation of the operating element,
wherein the device comprises a microphone unit and a speaker unit coupled to the telecommunications module for establishing voice communications with remote locations,
wherein the device comprises a near field communication module coupled to the control and evaluation unit,
wherein the device comprises a communication module for short-range communication, in particular a Bluetooth communication module, which is coupled to the control and evaluation unit
wherein a receiving unit for signals from tire pressure sensors (TPMS sensors) is provided, which is designed with the control and evaluation unit for acquiring identification data and measurement data from tire pressure sensors,
wherein the operating unit is integrated with the control and evaluation unit in a housing, and the near-field communication module, the receiving unit for signals from tire pressure sensors, the position determination system and the telecommunications module are also integrated in the housing.

2. Device according to claim 1, wherein the operating element is coupled to the control and evaluation unit to switch between a detection and transmission mode with continuous position detection and a detection and transmission mode with reduced amounts of condition data, without continuous position detection of the vehicle.

3. Device according to claim 1, wherein the control and evaluation device stores the identification data at least temporarily and transmits a message to a remote location in case of a detected change of the identification data.

## Revendications

1. Dispositif (1) d'enregistrement et de transmission de données d'état de véhicules, comprenant,
une interface de connexion (8) pour coupler le dispositif à une interface de diagnostic (interface OBD) du véhicule,
une unité de commande et d'évaluation (3) couplée à l'interface (8) pour réaliser la communication via un bus de véhicule,
un système de détermination de position par satellite (4) qui est couplé à l'unité de commande et d'évaluation (3) pour transmettre des données de position à l'unité de commande et d'évaluation,
un module de télécommunication (5) couplé à l'unité de commande et d'évaluation (3) pour effectuer une communication de données sans fil avec des facilités distantes (21, 22),
dans lequel il est prévu un dispositif de commande (2) qui est couplée à l'interface de connexion (8) par une liaison câblée de telle sorte qu'il est possible de disposer au dispositif de commande dans la zone de commande du conducteur, le dispositif de commande (2) ayant au moins un élément de commande (2a) qui est couplé au circuit de commande et d'évaluation,
dans lequel le circuit de commande et d'évaluation détecte et/ou transmet différentes quantités ou groupes de données d'état en fonction de l'actionnement de l'élément de commande,
dans lequel le dispositif comprend une unité de microphone et une unité de haut-parleur couplées au module de télécommunication pour établir des communications vocales avec des facilités distantes,
dans lequel le dispositif comprend un module de communication en champ proche couplé à l'unité de commande et d'évaluation,
dans lequel le dispositif comprend un module de communication pour la communication à courte distance, en particulier un module de communication Bluetooth, qui est couplé à l'unité de commande et d'évaluation,
dans lequel il est prévu une unité de réception de signaux provenant de capteurs de pression des pneus (capteurs TPMS), qui est configurée avec l'unité de commande et d'évaluation pour l'acquisition de données d'identification et de données de mesure provenant de capteurs de pression des pneus,
dans lequel le dispositif de commande est intégré avec l'unité de commande et d'évaluation dans un boîtier également que le module de communication en champ proche, l'unité de réception des signaux des capteurs de pression des pneus, le système de détermination de la position et le module de télécommunication.

2. Dispositif de la revendication 1, dans lequel le dispositif de commande est couplé au circuit de commande et d'évaluation pour commuter entre un mode de détection et de transmission avec détection de position continue et un mode de détection et de transmission avec des quantités réduites de données d'état, sans détection de position continue du véhicule.

3. Dispositif selon la revendication 1, dans lequel l'unité de commande et d'évaluation stocke les données d'identification au moins temporairement et transmet un message à une facilité distante en cas de changement détecté dans les données d'identification.
